# EUROPEAN PATENT SPECIFICATION

(11) **EP 3 169 266 B1**
(45) Date of publication and mention of the grant of the patent: **01.11.2017**
(21) Application number: 15747286.1
(22) Date of filing: 14.07.2015
(51) Int. Cl.: A61C 7/28, A61C 7/30

(54) **ORTHODONTIC LIGATURE**
ORTHODONTISCHE LIGATUR
LIGATURE ORTHODONTIQUE

(30) Priority: 16.07.2014 EP 14177328
(43) Date of publication of application: 24.05.2017
(73) Proprietor: 3M Innovative Properties Company, St. Paul, MN 55133-3427 (US)
(72) Inventor: PAEHL, Ralf M., 41453 Neuss (DE); THALHEIM, Barbara Andrea, 41453 Neuss (DE)
(74) Representative: Hohmann, Arno
(86) International application number: PCT/US2015/040367
(87) International publication number: WO 2016/011020

(56) References cited:
- WO-A1-2006/062613
- JP-A- 2010 284 188
- US-A- 4 330 271
- US-A- 5 829 974
- US-B1- 6 254 383
- US-B1- 6 280 186

## Description

### Field of the Invention

The invention relates to an orthodontic ligature for securing an orthodontic archwire to an orthodontic bracket, and in particular to an orthodontic ligature having a flap that forms a grip portion enabling the orthodontic ligature to be grasped by tweezers.

### Background Art

Orthodontic brackets are generally used in orthodontic treatments for moving one or more teeth from an initial position to a desired position in a patient's dentition. The initial position typically refers to a position at the beginning of an orthodontic treatment, for example a position in which the labial faces of the teeth are misaligned to each other, whereas in the desired position the labial faces of the same teeth may be generally aligned. For example the patient's teeth may be aligned relative to each other to provide the dentition with a more aesthetically pleasant appearance. Further one or more teeth may be moved within the dentition to compensate for a malocclusion. Such a movement of a tooth or teeth can be typically achieved by using one or more brackets attached to one or more teeth.

The brackets are typically connected to an elastic orthodontic archwire for applying a force to the teeth toward the desired position over a longer term. In many cases the orthodontic archwire is received within a slot provided in the bracket. Such a slot typically has an open side and thus allows for convenient insertion of the orthodontic archwire into the slot. For securing the archwire in the slot an orthodontic ligature, for example an elastic rubber band, is typically tied over the slot. Brackets therefore often have so-called tie-wings or wings which protrude from the bracket on opposite sides of the slot opening so that the elastic band can be hooked behind the wings and stretched between the wings in a manner to span the slot under tension. Many orthodontic ligatures are provided as generally doughnut-shaped elastic bands, however different shapes have been proposed.

For example US 5,829,974 discloses an orthodontic ligature for securing an arch wire to an orthodontic bracket, which has a stretchable ring member and an outwardly-extending grip extension integrally connected to the ring member. The ligature may be gripped at the grip extension using a pinching or clamping tool, facilitating installation of the ligature.

Often orthodontic brackets are off-the-shelf products which are designed to for use with clinical situations of different patients. Further there are customized orthodontic brackets which are typically made to fit with an individual clinical situation of one particular patient. Such patent-individual orthodontic brackets often lack any standardized configuration of the slot and the wings, which also causes the installation of the ligatures to become a patient- or even bracket-individual procedure.

Although existing ligatures provide certain advantages there is still a need for an orthodontic ligature which is easy to use, particularly for patient-individual orthodontic brackets, which are relatively durable, and which are relatively inexpensive.

### Summary of the Invention

The invention relates to an orthodontic ligature for securing an orthodontic archwire to an orthodontic bracket. Such orthodontic bracket may in particular concern a patient-individual orthodontic bracket, in more particular a lingual patient-individual orthodontic bracket. The orthodontic ligature is formed of a resilient band which extends along a center axis of the resilient band. The resilient band extends with the center axis circumferentially along a closed path and essentially in a plane. Accordingly the center axis also preferably extends essentially planar along a closed path.

The resilient band preferably extends at different cross-sections each having a center of area defined by the respective cross-section and the center axis is defined through these centers of area.

The band further forms a flap which extends in a direction essentially parallel to said plane. The flap forms a grip portion, for example enabling the orthodontic ligature to be grasped for handling. The resilient band further defines a hole having a major dimension along the direction in which the grip portion extends. Accordingly the center axis extends non-circular and may be for example key-hole-shaped or oval.

The invention is advantageous in that it provides an orthodontic ligature exhibiting a maximized durability. It has been found that a ligature tends to break at transitions between differently sized cross-sections of the resilient band. With the orthodontic ligature of the invention the magnitude of any variation of cross-sections along the path the band extends is minimized and thus the risk for breaks is also minimized. Further the invention provides a ligature which allows relatively safe and easy handling.

The orthodontic ligature of the invention preferably has a generally flat structure. In particular the orthodontic ligature may have two opposite outer faces which extend parallel and planar. Further the hole forms a through-hole extending through the orthodontic ligature in a dimension perpendicular to the plane.

In the embodiment of the invention, the resilient band extends along only a section of the circumference at a generally uniform cross-section and the other section of the circumference forms the flap. Accordingly the orthodontic ligature is formed by only two coherent portions, a first portion in which the resilient band extends along only a partial section of the circumference at a generally uniform cross-section and a second portion forming the flap. At least the uniform cross-section (of the first portion of the resilient band) in the dimension along the plane has a size which essentially corresponds to the size of the hole in the same dimension. Further at least the uniform cross-section extends generally rectangular (preferably with rounded corners) or race-track-shaped. The second portion which forms the flap preferably also extends at a generally rectangular cross-section (preferably with rounded corners). Further the orthodontic ligature has an overall outer shape in dimensions along the plane that is generally keyhole-shaped or oval. The hole in dimensions along the plane is overall keyhole-shaped or oval. The overall outer shape of the orthodontic ligature forms a first center of area and the shape of the hole forms a second center of area. The first center of area and the second center of area are preferably offset from each other. This configuration provides for a relatively smooth transition between portions of the resilient band having different cross-sections, which helps maximizing the durability of the ligature.

In a further embodiment of the invention, the orthodontic ligature has a retainer protruding from the flap in a dimension generally perpendicular or transverse to the plane. This means that although the orthodontic ligature has a generally flat overall structure the retainer protrudes over the major planar outer surface of the flat. The orthodontic ligature preferably has on each of opposite sides of the flap a pair of retainers with the pair of retainers being spaced from each other. This configuration allows for relatively precise positioning of tweezers between the retainers, which helps ensuring a reliable and repeatable handling of the orthodontic ligature, for example during installation in a patient's mouth. Further the retainers hinder the orthodontic ligature from slipping out off the tweezers. This helps reducing any risk of the orthodontic ligature to he lost in a patients mouth or any risk of the orthodontic ligature to be swallowed by a patient.

In still a further embodiment of the invention, the retainer(s) is (are) bar-shaped. The bar-shape preferably extends generally transverse to the greatest dimension of the hole. Further the bar-shape preferably extends generally transverse to the direction in which the flap extends. In a preferred embodiment of the invention, the orthodontic ligature is made of a thermoplastic elastomer. In more particular the orthodontic ligature may be made of thermoplastic polyurethane.

In a further aspect the invention relates to an orthodontic ligature tree. The orthodontic ligature tree comprises a bar at which a plurality of orthodontic ligatures according the invention are arranged. The orthodontic ligatures are preferably so arranged that the flaps are oriented away from the bar. Thus the orthodontic ligatures can be easily grasped, for example by a user. The bar and the orthodontic ligatures are monolithically formed in one piece from the same material. Preferably the entire orthodontic ligature tree is injection molded from one material. Further the orthodontic ligature and the bar are connected by a constricted link forming a pre-determined breaking zone. The cross-section of the constricted link preferably is in at least one dimension smaller than the cross-section of the bar and the cross-section of the orthodontic ligature in the same dimension. Thus upon pulling the orthodontic ligature away from the bar the constricted link forms the weakest area that consequently is determined to break first. The plurality of orthodontic ligatures are preferably arranged along two (preferably straight) rows on opposite sides of the bar.

In one embodiment of the invention, the orthodontic ligature tree further comprises a finger ring which is connected to the bar. The finger ring allows for holding the orthodontic ligature tree during handling and thus facilitates its use. Further the orthodontic ligatures are preferably color coded. The color code may represent a certain dimension and/or a certain material shore hardness of the ligature. Thus a user, like an orthodontist, can easily recognize an appropriate ligature from its color. Accordingly also the orthodontic ligature tree is preferably color coded, for example is preferably made from one material of one certain color.

In a further aspect the invention relates to a kit of parts which comprises the orthodontic ligature tree according to the invention and a set of preferably patient-individual lingual brackets. The skilled person will recognize that the invention may also be used with so-called off-the-shelf bracket, which are standardized non-patient-individual brackets for labial or lingual use. Each of the brackets preferably has a bonding pad forming a tooth-facing surface for attaching the bracket to a patient's tooth and a bracket body protruding from the bonding pad in a direction opposite of the tooth-facing surface. The bracket body at its free end preferably forms an archwire slot for receiving an orthodontic archwire. Further the bracket body has preferably at least one, preferably two, three or four tie-wings for attaching the orthodontic ligature. The tie-wings are preferably arranged on opposite sides of the slot so that the orthodontic ligature can be stretched between the wings to span the slot and thus to retain the orthodontic archwire within the slot. Brackets as they may be used with the present invention are for example disclosed in EP 1 474 064 B1.

### Brief Description of the Figures

- Fig. 1: is a top view of an orthodontic ligature according to the invention; and
- Fig. 2: is perspective view of an orthodontic ligature tree a according to the invention.

### Detailed Description of the Invention

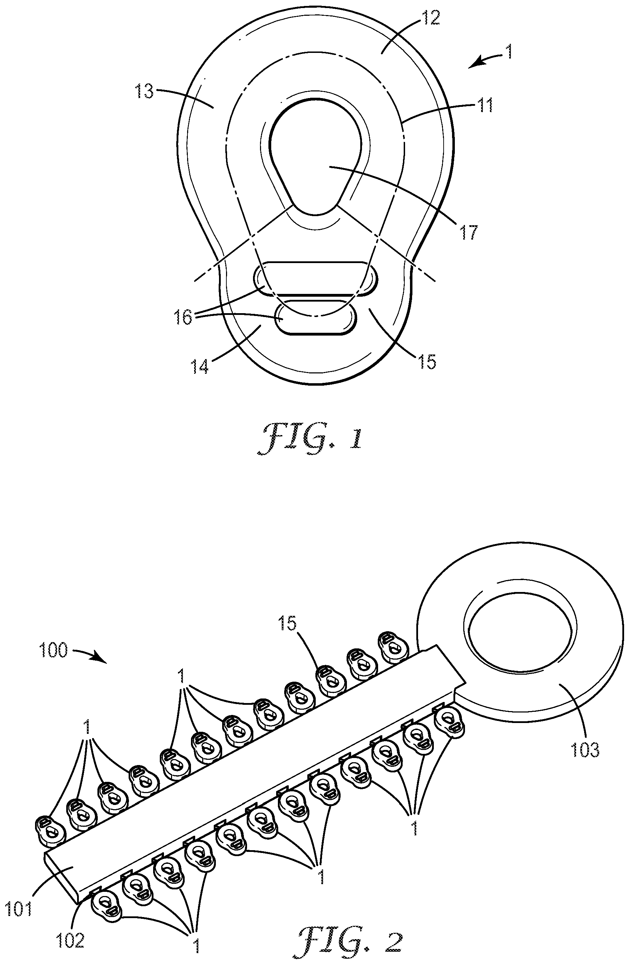

Fig. 1 shows an orthodontic ligature 1. The orthodontic ligature 1 is adapted for securing an orthodontic archwire to an orthodontic bracket (not shown). In the example the orthodontic ligature 1 is illustrated at a stage at which it is relaxed, i.e. at a stage at which the orthodontic ligature 1 is not stretched or otherwise deformed by external forces.

The orthodontic ligature 1 is formed of a resilient band 12 which extends circumferentially along a non-circular closed path. In other words the resilient band 12 forms a closed non-circular ring. The Figure illustrates the closed path by the neutral axis 11. The neutral axis 11 for the purpose of the present specification is defined by the center areas of the cross-sections along which the resilient band extends. The resilient band 12 has a first section 13 and a second section 14, and the first and second section 13, 14 together form the orthodontic ligature 1. The first section 13 extends along a first partial length of the circumferential path. In the example the first section 13 extends at a generally uniform cross-section. Thus any stretching forces as they typically occur during use of the orthodontic ligature 1 in a patient's mouth are generally uniformly distributed within the first section 1. In the example the cross-section of the first section 13 is substantially rectangular, in particular rectangular which rounded corners. In another example the cross-section of the first section may be racing-track-shaped, meaning the outer shape of the cross-section may correspond to two spaced mirrored 180 degrees circular arcs of the same diameter which are connected by two parallel lines of the same length. In still further examples the cross-section of the first section may be circular or oval.

The resilient band in the second section 14 forms a flap 15. The flap 15 extends essentially parallel to the plane which the first section 13 extends along. The flap 15 forms a grip portion. Accordingly the flap 15 enables a user (for example an orthodontist during installing the orthodontic ligature 1 to a bracket) to grab the orthodontic ligature 1 at the flap 15 by help of tweezers. The flap 15 has a pair of retainers 16 which protrudes from the flap 15 in a dimension transverse to the dimension in which the flap 15 extends. The retainers 16 are spaced. The retainers 16 allow the tweezers to be positioned between, and thus to be positioned at a pre-determined position. This helps avoiding that the tweezers interfere with the bracket during installation of the orthodontic ligature 1 due to eventually malpositioned tweezers relative to the ligature 1. Further this helps avoiding that the flap 15 tears or slips out of the tweezers during installation of the orthodontic ligature 1. The pair of retainers 16 is preferably arranged on opposite sides of the flap 15.

The resilient band 12 further defines a non-circular hole 17. The resilient band 12 extends such that the hole 17 has a major dimension along a direction in which the flap 15 extends and is smaller in the dimension transverse thereto. In the example the hole 17 is elongated toward a direction in which the flap 15 extends. Thereby the dimensional change of the cross-section in the transition between the first and second section 13, 14 of the resilient band 12 is minimized. It has been found that this helps maximizing the durability of the ligature installed in a patient's mouth.

Fig. 2 shows an orthodontic ligature tree 100 having a plurality of orthodontic ligatures 1. The orthodontic ligature tree 100 has a bar 101 at which on opposite sides of the bar 101 orthodontic ligatures 1 are arranged in a straight row. The orthodontic ligatures 1 are arranged with the flaps 15 outwardly. Therefore each orthodontic ligature 1 can be easily grasped by a user between the retainers 16 at the flap 15 and can be used without repositioning or re-grasping. The orthodontic ligatures 1 are connected with the bar 101 by constricted links 102 which form a pre-determined breaking zone. Therefore the orthodontic ligatures 1 are enabled for separating from the bar by simply pulling them away from the bar 101 until the constricted link 102 breaks. The orthodontic ligature tree 100 further has a finger ring 103. The finger ring 103 facilitates handling of the orthodontic ligature tree 100, for example during separation of an orthodontic ligature 1 from the orthodontic ligature tree 100.

In the example the orthodontic ligature tree 100 is monolithically formed at least including the orthodontic ligatures 1, the bar 101, the constricted links 102 and the finger ring 103. Accordingly the orthodontic ligature tree 100 is made of one resilient material, in the example from a thermoplastic elastomer, in more particular from thermoplastic polyurethane, and preferably from Texin® 285 as available from Bayer AG, Germany. Texin® 285 is an aromatic polyester-based thermoplastic polyurethane grade with Shore A hardness of approximately 85.

## Claims

1. An orthodontic ligature (1) for securing an orthodontic archwire to an orthodontic bracket, the orthodontic ligature (1) being formed of a resilient band (12) which extends circumferentially along a closed path and essentially in a plane, wherein the band (12) further forms a flap (15) which extends in a direction essentially parallel to said plane, the flap (15) forming a grip portion, and wherein the resilient band (12) defines a hole forming a through-hole extending through the orthodontic ligature in a dimension perpendicular to the plane, wherein the hole in dimensions along the plane is overall keyhole-shaped or oval and has a major dimension along the direction in which the grip portion extends and a smaller dimension transverse thereto, wherein the band (12) extends along only a section (13) of the circumference at a generally uniform cross-section and the other section (14) of the circumference forms the flap (15), wherein at least the uniform cross-section in the dimension along the plane has a size which essentially corresponds to the size of the hole (17) in the same dimension, and wherein the ligature (1) has an overall outer shape in dimensions along the plane that is generally keyhole-shaped or oval.

2. The orthodontic ligature (1) of claim 1, having a retainer (16) protruding from the flap (15) in a dimension generally perpendicular from the plane.

3. The orthodontic ligature (1) of claim 2, having on each of opposite sides of the flap (15) a pair of retainers (16) with the pair of retainers (16) being spaced from each other.

4. The orthodontic ligature (1) of claim 2 or 3, wherein the retainer(s) (16) is/are bar-shaped, extending generally transverse to the greatest dimension of the (17).

5. The orthodontic ligature (1) of claim 1, wherein at least the uniform cross-section extends generally rectangular or race-track-shaped.

6. The orthodontic ligature (1) of claim 5, wherein the overall outer shape of the orthodontic ligature (1) forms a first center of area and the shape of the hole (17) forms a second center of area, wherein the first and second center of area are offset from each other.

7. The orthodontic ligature (1) of any of the preceding claims, being made of a thermoplastic elastomer.

8. An orthodontic ligature tree (100), comprising a bar (101) at which a plurality of orthodontic ligatures (1) according to any of the claims 1 to 7 are arranged with the flaps (15) oriented away from the bar (101), wherein the bar (101) and the orthodontic ligatures (1) are monolithically formed in one piece from the same material and being connected by a constricted link (102) forming a pre-determined breaking zone.

9. The orthodontic ligature tree (100) according to claim 8 wherein the plurality of orthodontic ligatures (1) are arranged along two rows on opposite sides of the bar (101).

10. The orthodontic ligature tree (100) according to claim 8 or 9, Further comprising a finger ring (103) which is connected to the bar (101).

11. A kit of parts, comprising the orthodontic ligature tree (100) according to any of the claims 8 to 10, and a set of patient-individual lingual brackets.

## Patentansprüche

1. Orthodontische Ligatur (1) zum Befestigen eines orthodontischen Bogendrahts an eine orthodontische Klammer, wobei die orthodontische Ligatur (1) aus einem elastischen Band (12) gebildet ist, welches sich umlaufend entlang eines geschlossenen Pfads und im Wesentlichen in einer Ebene erstreckt, wobei das Band (12) ferner eine Klappe (15) bildet, welche sich in eine Richtung im Wesentlichen parallel zu der Ebene erstreckt, wobei die Klappe (15) einen Griffabschnitt bildet, und wobei das elastische Band (12) ein Loch definiert, das in einer zur Ebene senkrechten Dimension ein sich durch die orthodontische Ligatur erstreckendes Durchgangsloch bildet, wobei das Loch in Dimensionen entlang der Ebene insgesamt schlüssellochförmig oder oval ist und eine Hauptdimension entlang der Richtung aufweist, in welcher der Griffabschnitt sich erstreckt und eine kleinere Dimension querlaufend dazu, wobei das Band (12) sich ausschließlich entlang eines Abschnitts (13) des Umfangs in einem allgemein gleichförmigen Querschnitt erstreckt und der weitere Abschnitt (14) des Umfangs die Klappe (15) bildet, wobei mindestens der gleichförmige Querschnitt in der Dimension entlang der Ebene eine Größe aufweist, welche im Wesentlichen der Größe des Lochs (17) in der gleichen Dimension entspricht, und wobei die Ligatur (1) eine Gesamtaußengestalt in Dimensionen entlang der Ebene aufweist, die allgemein schlüssellochförmig oder oval ist.

2. Orthodontische Ligatur (1) nach Anspruch 1, mit einer aus der Klappe (15) in einer Dimension allgemein senkrecht aus der Ebene hervorstehenden Zahnklammer (16).

3. Orthodontische Ligatur (1) nach Anspruch 2, mit einem Paar von Zahnklammern (16) an jeder von gegenüberliegenden Seiten der Klappe (15), wobei das Paar von Zahnklammern (16) voneinander beabstandet ist.

4. Orthodontische Ligatur (1 ) nach Anspruch 2 oder 3, wobei die Zahnklammer(n) (16) stangenförmig ist/sind, sich allgemein zur größten Dimension des Lochs (17) querlaufend erstreckend.

5. Orthodontische Ligatur (1 ) nach Anspruch 1, wobei mindestens der gleichförmige Querschnitt sich allgemein rechteckig oder rennbahnförmig erstreckt.

6. Orthodontische Ligatur (1) nach Anspruch 5, wobei die Gesamtaußengestalt der orthodontischen Ligatur (1) einen ersten Flächenschwerpunkt bildet und die Gestalt des Lochs (17) einen zweiten Flächenschwerpunkt bildet, wobei der erste und der zweite Flächenschwerpunkt voneinander versetzt sind.

7. Orthodontische Ligatur (1) nach einem der vorstehenden Ansprüche, die aus einem Thermoplastelastomer hergestellt ist.

8. Orthodontischer Ligaturenbaum (100), umfassend eine Stange (101), an welcher eine Vielzahl von orthodontischen Ligaturen (1) nach einem der Ansprüche 1 bis 7, mit den Klappen (15) von der Stange (101) weg orientiert, angeordnet sind, wobei die Stange (101) und die orthodontischen Ligaturen (1) monolithisch in einem Stück aus dem gleichen Material gebildet und durch eine eingeengte Verbindung (102), einen vorher festgelegten Bruchbereich bildend, verbunden sind.

9. Orthodontischer Ligaturenbaum (100) nach Anspruch 8, wobei die Vielzahl von orthodontischen Ligaturen (1) entlang zwei Reihen an gegenüberliegenden Seiten der Stange (101) angeordnet ist.

10. Orthodontischer Ligaturenbaum (100) nach Anspruch 8 oder 9, ferner umfassend einen Fingerring (103), welcher mit der Stange (101) verbunden ist.

11. Kit von Teilen, umfassend den orthodontischen Ligaturenbaum (100) nach einem der Ansprüche 8 bis 10 und ein Set von patientenindividuellen lingualen Klammern.

## Revendications

1. Ligature orthodontique (1) pour fixer un arc dentaire orthodontique à un bracket orthodontique, la ligature orthodontique (1) étant formée d'une bande élastique (12) qui s'étend de façon circonférentielle le long d'une trajectoire fermée et pratiquement dans un plan, dans laquelle la tranche (12) forme en outre un rabat (15) qui s'étend dans une direction pratiquement parallèle audit plan, le rabat (15) formant une partie de préhension, et dans laquelle la bande élastique (12) définit un trou formant un trou traversant s'étendant à travers la ligature orthodontique dans une dimension perpendiculaire au plan, dans laquelle le trou dans les dimensions le long du plan est globalement en forme de trou de serrure ou de forme ovale et a une dimension majeure le long de la direction dans laquelle s'étend la partie de préhension et une dimension plus petite transversale à celle-ci, dans laquelle la tranche (12) s'étend uniquement le long d'une section (13) de la circonférence selon une section transversale généralement uniforme et l'autre section (14) de la circonférence forme le rabat (15), dans laquelle au moins la section transversale uniforme dans la dimension le long du plan a une taille qui correspond pratiquement à la taille du trou (17) dans la même dimension, et où la ligature (1) a une forme externe globale dans les dimensions le long du plan qui est généralement en forme de trou de serrure ou ovale.

2. Ligature orthodontique (1) selon la revendication 1, possédant un élément de retenue (16) dépassant du rabat (15) dans une dimension généralement perpendiculaire par rapport au plan.

3. Ligature orthodontique (1) selon la revendication 2, possédant sur chacun de côtés opposés du rabat (15) une paire d'éléments de retenue (16), chaque paire d'éléments de retenue (16) étant espacée l'une de l'autre.

4. Ligature orthodontique (1) selon la revendication 2 ou 3, dans laquelle le ou les élément(s) de retenue (16) est/sont en forme de barre, s'étendant de façon généralement transversale à la plus grande dimension du trou (17).

5. Ligature orthodontique (1) selon la revendication 1, dans laquelle au moins la section transversale uniforme s'étend généralement rectangulaire ou en forme de piste de course.

6. Ligature orthodontique (1) selon la revendication 5, dans laquelle la forme externe globale de la ligature orthodontique (1) forme un premier centre de zone et la forme du trou (17) forme un deuxième centre de zone, dans laquelle les premier et deuxième centres de zone sont décalés l'un par rapport à l'autre.

7. Ligature orthodontique (1) selon l'une quelconque des revendications précédentes, étant constituée d'un élastomère thermoplastique.

8. Arbre de ligatures orthodontiques (100), comprenant une barre (101) au niveau de laquelle est disposée une pluralité de ligatures orthodontiques (1) selon l'une quelconque des revendications 1 à 7 avec les rabats (15) orientés à l'écart de la barre (101), dans lequel la barre (101) et les ligatures orthodontiques (1) sont formées monolithiquement dans une pièce du même matériau et sont reliées par un lien resserré (102) formant une zone de cassure prédéterminée.

9. Arbre de ligatures orthodontiques (100) selon la revendication 8, dans lequel la pluralité de ligatures orthodontiques (1) est disposée le long de deux rangées sur des côtés opposés de la barre (101).

10. Arbre de ligatures orthodontiques (100) selon la revendication 8 ou 9, comprenant en outre une poignée annulaire (103) qui est reliée à la barre (101).

11. Trousse de pièces, comprenant l'arbre de ligatures orthodontiques (100) selon l'une quelconque des revendications 8 à 10 et un ensemble de brackets linguaux individuels pour le patient.
